# EUROPÄISCHE PATENTSCHRIFT

(11) **EP 0 443 338 B1**
(45) Veröffentlichungstag und Bekanntmachung des Hinweises auf die Patenterteilung: **11.01.1995**
(21) Anmeldenummer: 91100865.4
(22) Anmeldetag: 24.01.1991
(51) Int. Cl.: A01B 73/04, A01D 78/10

(54) **Kreiselheumaschine mit verriegelbaren Aussenarmen**
Hay-making machine with lockable outer arms
Machine de fenaison à bras externes blocables

(30) Priorität: 20.02.1990 DE 4005288
(43) Veröffentlichungstag der Anmeldung: 28.08.1991
(73) Patentinhaber: CLAAS SAULGAU GMBH, D-88340 Saulgau (DE)
(72) Erfinder: Deni, Franz, W-7968 Saulgau-Bogenweiler (DE)

(56) Entgegenhaltungen:
- EP-A- 0 300 937
- US-A- 4 050 523
- US-A- 4 074 766
- US-A- 4 178 998
- US-A- 4 453 601
- US-A- 4 615 397

## Beschreibung

Die Erfindung bezieht sich auf Kreiselheumaschinen nach dem Oberbegriff des Patentanspruches.

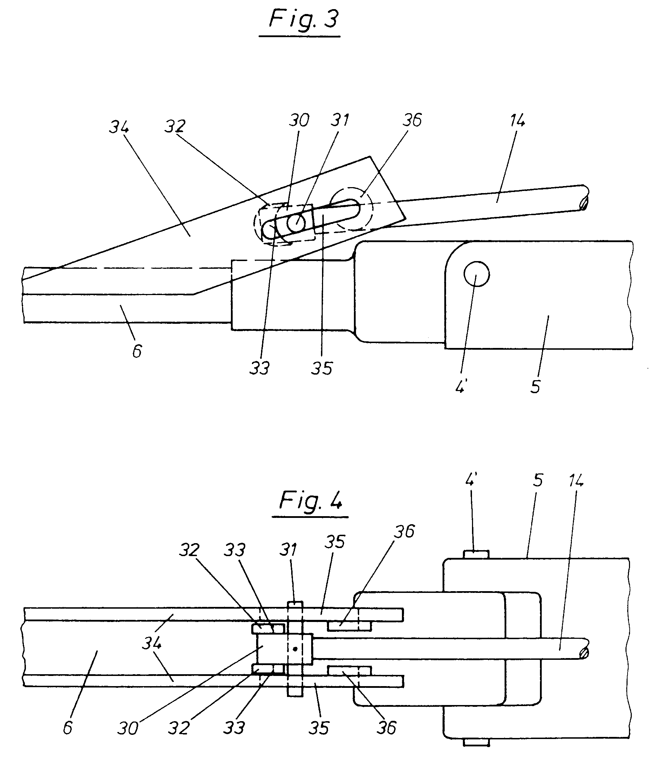

Derartige Kreiselheumaschinen sind z. B. aus der DE-Patentanmeldung P 39 38 491.8 bekannt. Bei diesen Maschinen sind Arbeitswerkzeuge an hochklappbaren Armen angeordnet, die mittels hydraulischer Hubzylinder in eine aufrechte oder nach innen geneigte Lage zum Transport verschwenkt werden können. Damit die, die Arbeitswerkzeuge tragenden Arme in der Arbeitsstellung Bodenunebenheiten folgen können, sind sie regelmäßig mittels einer Freilaufeinrichtung mit den Hubzylindern verbunden. In der Regel wird diese durch eine Schlitzführung dargestellt. Eine solche Schlitzführung ist in Figur 4 der DE-Patentanmeldung P 39 38 491.8 besonders gut zu erkennen. Ein Nachteil dieser sehr einfachen Konstruktion besteht darin, daß die hochgeklappten Arme nicht formschlüssig mit dem Maschinenrahmen verbunden sind. Bei der Transportfahrt, besonders beim schnellen Befahren unebener Wege, können hohe Beschleunigungen in senkrechter oder waagrechter Richtung auftreten. Dies kann dazu führen, daß die Arme nach oben oder nach der Seite beschleunigt werden und sich in der Schlitzführung abheben und nach Beendigung der Beschleunigung wieder in die Ruhelage zurückfallen. Dadurch können schlagartig sehr hohe Kräfte auftreten.

Aus der US-PS 41 78 998 ist es auch schon bekannt, die eine Schlitzführung aufweisende Freilaufeinrichtung so zu gestalten, daß in hochgeschwenkter Transportstellung die die Arbeitswerkzeuge tragenden Arme formschlüssig mit dem hydraulischen Hubzylinder und damit mit dem Maschinenrahmen verbunden sind.

Bei dieser bekannten Ausführung ist der Schlitz der Freilaufeinrichtung am freien Ende eines mit einem äußeren Tragarm schwenkbar verbundenen Hebels angeordnet und ein den Schlitz durchsetzender Mitnahmebolzen ist gleichfalls am freien Ende eines mit dem festen Maschinenrahmen schwenkbar verbundenen Hebels vorgesehen. Der Schlitz ist bei abgelassener Arbeitsstellung des äußeren Tragarmes etwa quer zur Wirkrichtung des Hubzylinders gerichtet. Die Verwendung von Schwenkhebeln am Maschinenrahmen und an den nach oben schwenkbaren Tragarmen für die Freilaufeinrichtung macht die bekannte Ausführung aufwendig und kompliziert und der Verlauf des Schlitzes der Freilaufeinrichtung in Arbeitsstellung quer zur Wirkrichtung des Hubzylinders bedingt, daß die Verriegelung der Freilaufeinrichtung erst eintritt, wenn die äußeren Tragarme bereits schon ein beträchtliches Maß nach oben verschwenkt sind. Die Folge ist, daß bei Wendefahrten am Feldende oder bei Leerfahrten über das Feld, wenn regelmäßig die äußeren Tragarme für eine bessere Bodenfreiheit nur um etwa 15° - 20° nach oben verschwenkt und noch nicht formschlüssig mit den Hubzylindern verbunden sind, die Maschine durch vertikales Schwingen der Tragarme starken Beschleunigungskräften ausgesetzt ist, was zu Maschinenschäden führen kann.

Mit einer Ausführung nach dem Kennzeichen des Patentanspruches können die vorstehend beschriebenen Nachteile vermieden werden. Die zur Steuerung der Freilaufeinrichtung verwendeten Schwenkhebel bei einer Ausführung nach der US-PS 41 78 998 können entfallen und eine Verriegelung der Freilaufeinrichtung tritt bereits dann schon ein, wenn der äußere Tragarm durch den Hubzylinder seine Schwenkbewegung beginnt.

Die Erfindung wird anhand von 6 Abbildungen beispielsweise erläutert:
- Fig. 1: zeigt eine Kreiselheumaschine mit 6 Arbeitswerkzeugen von hinten. Gestrichelt gezeichnet ist die Arbeitsstellung, strichpunktiert eine Stellung mit ausgehobenen Außenarmen und ausgezogen die Transportstellung.
- Fig. 2: zeigt eine gleiche Maschine (deren linke Hälfte) in größerem Maßstab. Strichpunktiert ist hier eine Stellung mit einem angehobenen Außenarm.
- Fig. 3: zeigt eine verriegelbare Schlitzführung in Arbeitsstellung in Ansicht von hinten.
- Fig. 4: zeigt den gleichen Gegenstand von oben.

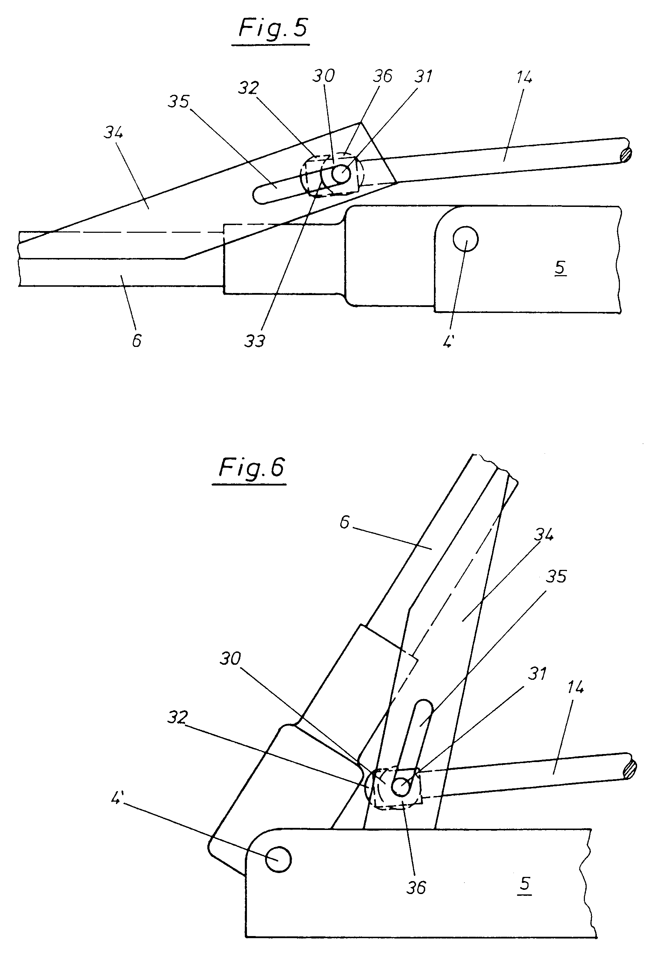

- Fig. 5: zeigt den gleichen Gegenstand von hinten bei Beginn des Aushebevorganges.
- Fig. 6: zeigt den gleichen Gegenstand, wobei ein Außenarm ganz angehoben ist, während sich der Innenarm noch in waagrechter Lage befindet.

Eine Kreiselheumaschine hat einen Maschinenrahmen (1), der zwei Arbeitskreisel (2) aufnimmt und von zwei Laufrädern (3) abgestützt wird. An den Enden des Maschinenrahmens (1) sind mit Gelenkbolzen (4) je ein Innenarm (5) verschwenkbar angeschlossen. Die Innenarme (5) tragen je einen Arbeitskreisel (2) und ein Laufrad (3). Mit den freien Enden der Innenarme (5) sind über weitere Gelenkbolzen (4') je ein Außenarm (6) bzw. (6') verschwenkbar verbunden. Sie tragen ebenfalls je einen Arbeitskreisel (2) und ein Laufrad (3).

An Drehachsen (12), die in horizontaler Richtung mit unterschiedlichem Abstand von den Gelenkbolzen (4) für die Innenarme (5) liegen, sind hydraulische Hubzylinder (13) gelenkig mit dem Maschinenrahmen (1) verbunden. Ihre Kolbenstange (14) hat am Ende einen Kopf (30), der von einem Bolzen (31) durchsetzt wird. Mit dem Kopf (30) sind zwei Segmente (32) fest verbunden. Sie sind an ihrer, dem Bolzen (31) zugewandten Seite (33) kreisbogenförmig ausgebildet mit einem Mittelpunkt, der dem des Bolzens (31) entspricht.

Mit einem Außenarm (6) sind zwei Laschen (34) fest verbunden. Sie haben Schlitze (35), die von dem Bolzen (31) durchsetzt werden. Mit den Laschen (34) sind auf deren Innenseite je eine kreisrunde Scheibe (36) fest verbunden. Sie sind mit den Schlitzen (35) der Laschen (34) übereinstimmend geschlitzt und haben einen Außendurchmesser, der demjenigen der kreisbogenförmigen Seite (33) der Segmente (32) entspricht.

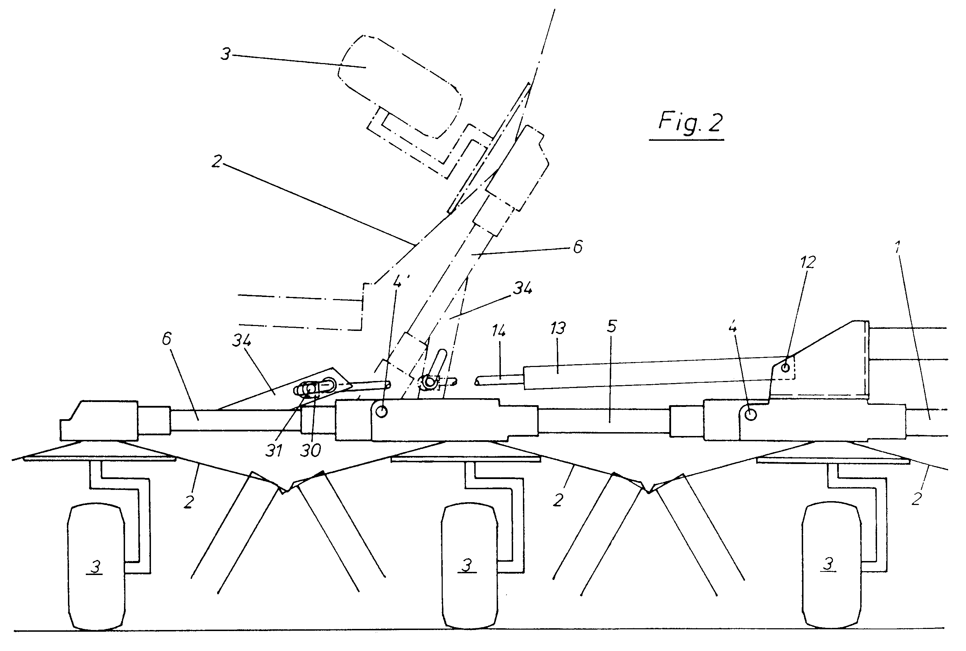

In der Arbeitsstellung stehen die Innenarme (5) und die Außenarme (6) etwa waagrecht. Die Kolbenstange (14) ist so weit ausgefahren, daß der Bolzen (31) etwa in der Mitte der Schlitze (35) steht (Figuren 2, 3, 4). In dieser Stellung können sich die Innenarme (5) und/oder die Außenarme (6) nach oben und unten bewegen, um sich Bodenunebenheiten anzupassen.

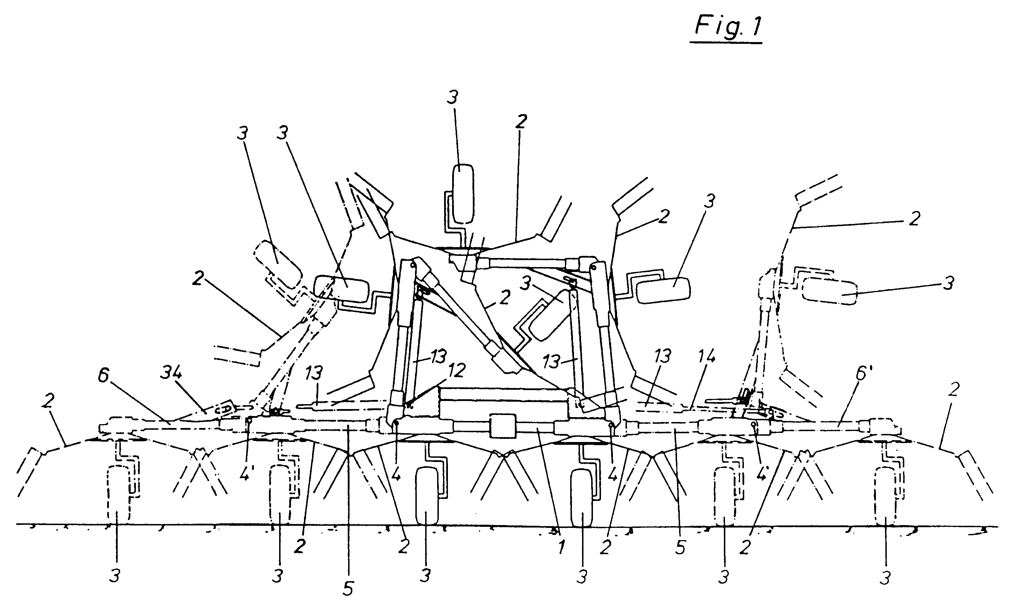

Um die Arme (5, 6) zum Transport auszuheben, wird die Kolbenstange (14) in den Hubzylinder (13) eingefahren. Die Kolbenstange (14) bewegt sich zunächst in die in Figur (5) gezeigte Stellung. Der Bolzen (31) ist jetzt am Ende des Schlitzes (35) angelangt und zugleich berühren sich die kreisbogenförmigen Seiten (33) der Segmente (32) und die Außenflächen der kreisrunden Scheiben (36). Beim weiteren Einfahren der Kolbenstange (14) beginnt sich der Außenarm (6) um den Gelenkbolzen (4') zu drehen, wobei sich auch die Segmente (32) um die kreisrunden Scheiben (36) drehen. Von hier ab kann sich der Bolzen (31) nicht mehr frei in den Schlitzen (35) bewegen. Wenn die Kolbenstange (14) weiter eingefahren wird, nimmt der Außenarm (6) schließlich die in Figur 2 strichpunktiert gezeichnete Stellung ein. Da sich die Laschen (34) jetzt auf den Innenarm (5) abstützen, ist eine weitere Drehung des Außenarmes (6) nicht mehr möglich. Jetzt beginnt sich auch der Innenarm (5) um den Gelenkbolzen (4) zu drehen, bis schließlich die in Figur 1 ausgezogen gezeichnete Stellung erreicht ist. Wichtig ist hierbei, daß in allen Zwischenpositionen und der Endstellung die Verbindung zwischen der Kolbenstange (14) und den Laschen (34) spielfrei ist, so daß zwischen ihnen nur noch eine Drehbewegung, aber keine Längsbewegung mehr möglich ist. Die beiden Bauelemente (14, 34) sind also formschlüssig miteinander verbunden.

Die Erfindung könnte sinngemäaß auch bei einer Kreiselheumaschine mit 4 Arbeitswerkzeugen verwendet werden, bei der links und rechts des Maschinenrahmens nur ein hochklappbarer Arm mit einem Arbeitswerkzeug vorhanden ist.

## Patentansprüche

1. Kreiselheumaschine mit mindestens vier Arbeitswerkzeugen (2), von denen zwei an einem mittig angeordneten Maschinenrahmen (1) und die weiteren Arbeitswerkzeuge (2) an je einem, um eine in Fahrtrichtung liegende Achse schwenkbaren Arm (5, 6, 6') gelagert sind, wobei die Arme (5, 6, 6') in der Arbeitsstellung etwa waagrecht liegen und in Transportstellung nach oben und/oder nach innen geschwenkt sind und mit hydraulischen Hubzylindern (13) für die Aushebung der Arme (5, 6, 6') in Transportstellung, die in der Arbeitsstellung mittels einer eine Schlitzführung (30, 31, 35) aufweisender Freilaufeinrichtung eine begrenzte Beweglichkeit der Arme (5, 6, 6') nach oben und unten zuläßt, dadurch gekennzeichnet, daß der Schlitz (35) der Freilaufeinrichtung (30, 31, 35), in Arbeitsstellung der Maschine etwa in Wirkrichtung des Hubzylinders (13) verlaufend, in fest mit dem äußeren der Arme (6, 6') verbundenen Laschen (34) angeordnet und ein den Schlitz (35) durchsetzender Bolzen (31) in einen Kopf (30) an der Kolbenstange (14) des Hubzylinders (13) vorgesehen ist und daß an der Innenseite der Laschen (34) an dem, den Hubzylinder (13) zugewandten Ende des Schlitzes (35) kreisrunde Scheiben (36) fest angebracht sind, die in Bereich des Schlitzes (35) mit diesen übereinstimmend geschlitzt sind und daß weiterhin mit den Kopf (30) der Kolbenstange (14) Segmente (32) verbunden sind, deren den Bolzen (31) zugewandte Seiten (33) kreisbogenförmig ausgebildet sind mit einen Mittelpunkt, der dem des Bolzens (31) und einen Radius, der dem der kreisrunden Scheiben (36) entspricht, wobei diese Segmente (32) von Beginn des Aushebevorganges der Arme an derart in Wirkverbindung mit den kreisrunden Scheiben (36) stehen, daß nur noch eine Drehbewegung um den gemeinsamen Mittelpunkt der Scheiben (36) und der kreisbogenförmigen Seiten (33) der Segmente (32) möglich ist.

## Claims

1. A rotary hay making machine comprising at least four working implements (2) of which two are mounted on a centrally arranged machine frame (1) and the further working implements (2) are mounted on a respective arm (5, 6, 6') which is pivotable about an axis disposed in the direction of travel, wherein the arms (5, 6, 6') are disposed approximately horizontally in the working position and are pivoted upwardly and/or inwardly in the transportation position, and hydraulic lift cylinders (13) for lifting the arms (5, 6, 6') into the transportation position, which in the working position permits limited mobility of the arms (5, 6, 6') upwardly and downwardly by means of a free-motion device having a slot guide means (30, 31, 35), characterised in that the slot (35) of the free-motion device (30, 31, 35), extending approximately in the direction of operation of the lift cylinder (13) in the working position of the machine, is arranged in plates (34) fixedly connected to the outer one of the arms (6, 6') and a pin (31) which passes through the slot (35) is provided in a head (30) on the piston rod (14) of the lift cylinder (13) and that fixedly disposed at the insides of the plates (34) at the end of the slot (35) that is towards the lift cylinder (13) are round discs (36) which in the region of the slot (35) are slotted in conformity therewith and that segments (32) are further connected to the head (30) of the piston rod (14), the sides (33) of the segments, that are towards the pin (31), being in the form of a circular arc with a centre point which corresponds to that of the pin (31) and of a radius which corresponds to that of the round discs (36), wherein from the beginning of the operation of lifting the arms said segments (32) are operatively connected to the round discs (36) in such a way that only a rotary movement about the common centre point of the discs (36) and the arcuate sides (33) of the segments (32) is possible.

## Revendications

1. Machine de fenaison comprenant au moins quatre outils de travail (2), dont deux sont montés sur un châssis (1) de la machine disposé centralement et les autres outils de travail (2) sont montés sur un bras (5, 6, 6') pouvant pivoter autour d'un axe orienté en direction de la marche, les bras (5, 6, 6') étant sensiblement horizontaux dans la position de travail et étant pivotés vers le haut et/ou vers l'intérieur par des vérins hydrauliques (13) pour le soulèvement des bras (5, 6, 6') dans la position de transport, machine qui admet dans la position de travail une mobilité limitée des bras (5, 6, 6') vers le haut et vers le bas au moyen d'un dispositif à course libre comportant un dispositif de guidage à fente (30, 31, 35), caractérisée en ce que la fente (35) du dispositif à course libre (30, 31, 35) est orientée sensiblement dans la direction d'action du vérin (13) dans la position de travail de la machine, est constituée dans des pattes (34) reliées fermement à celui des bras (6, 6') qui est le plus à l'extérieur, un tourillon (31) qui traverse la fente (35) est prévu dans une tête (30) de la tige de piston (14) du vérin (13), en ce que des disques de forme ronde (36) sont montés fermement sur le côté interne des pattes (34) à l'extrémité de la fente (35) qui est tournée vers le vérin (13), disques qui sont munis d'une fente qui concorde dans la région de la fente (35) avec cette dernière, et en ce qu'en outre des segments (32) sont reliés à la tête (30) de la tige de piston (14), dont les côtés (33) qui sont tournés vers le tourillon (31) sont de constitution en forme d'arcs de cercle dont le centre coïncide avec celui du tourillon (31) et dont le rayon correspond à celui du disque de forme ronde (36), ces segments (32) étant en liaison opérationnelle avec les disques de forme ronde (36) dès le début du mouvement de soulèvement des bras de manière que seul un mouvement de rotation autour du centre commun aux disques (36) et aux côtés (33) en forme d'arcs de cercle des segments (32) soit possible.
